# EUROPEAN PATENT APPLICATION

(11) **EP 1 992 660 A1**
(43) Date of publication of application: **19.11.2008**
(21) Application number: 07737575.6
(22) Date of filing: 01.03.2007
(51) Int. Cl.: C08L 7/00, B60C 1/00, B60C 9/00, C08K 3/36, C08K 5/47, C08L 15/00

(54) **RUBBER COMPOSITION FOR CARCASS PLIES AND/OR BELTS, CARCASS PLIES AND/OR BELTS MADE BY USING THE SAME, AND PROCESS FOR PRODUCTION OF THE COMPOSITION**

(30) Priority: 08.03.2006 JP 2006062592
(71) Applicant: SUMITOMO RUBBER INDUSTRIES, LTD., Kobe-shi, Hyogo 651-0072 (JP)
(72) Inventor: WADA, Takao, Hyogo 6510072 (JP); UCHIDA, Mamoru, Hyogo 6510072 (JP); HIRAYAMA, Tomoaki, Hyogo 6510072 (JP)
(74) Representative: Manitz, Finsterwald & Partner GbR
(86) International application number: PCT/JP2007/053879
(87) International publication number: WO 2007/105493

(57) **Abstract**

The present invention can provide the rubber composition for a carcass ply and/or a belt, which comprises a rubber component comprising 30 to 90 % by weight of a natural rubber and 10 to 70 % by weight of an epoxidized natural rubber and a filler containing not less than 80 % by weight of silica, has adhesion as favorably compared with a rubber composition mainly comprising raw materials derived from non-petroleum resources, and makes it possible to reduce an adverse effect on environment and provide for the future decrease of petroleum supply, the carcass ply and/or the belt using the same composition, and the preparation process of the same composition. It is preferable that the process for preparing the rubber composition for a carcass ply and/or a belt comprises a step (1) of kneading the natural rubber and silica and a step (2) of kneading the kneaded product discharged in the step (1) and the epoxidized natural rubber.

## Description

### TECHNICAL FIELD

The present invention relates to a rubber composition for a carcass ply and/or a belt, a carcass ply and/or a belt using the rubber composition, and a preparation process of the rubber composition.

### BACKGROUND ART

Generally, since heavy load is applied on a tire for an automobile, a steel cord has been used as a reinforcing material in a carcass ply layer and a belt layer. Particularly, peeling off of a rubber and a steel cord caused by heat generation of a tire during running causes crucial damage on the tire, thus, strong adhesion is required.

Conventionally, in a rubber composition for a carcass ply and/or a belt, raw materials derived from petroleum resources such as a styrene-butadiene rubber (SBR) and a carbon black have been mainly used. However, in recent years, an interest in environmental protection of the earth has been increasing, and such an increasing interest is seen also in the case of automobiles, and regulation on suppression of CO₂ emission has been made more rigorous. Further, since petroleum resources are limited and supply thereof has been gradually decreasing year by year, oil price is predicted to surge in future, and there is a limit in use of raw materials derived from petroleum resources such as a carbon black.

In general, it is known that silica is used as a reinforcing agent instead of a carbon black in order to reduce fuel consumption, and in this case, however, there is a problem that adhesion with a cord required for a rubber composition for coating a carcass is deteriorated.

JP-2003-63206A discloses an ecological tire excellent in grip performance, durability and ride quality, in which a ratio of resources other than petroleum resources in a tire is increased by making a tire have a carcass ply topping made of a specific resource other than petroleum resources. However, this ecological tire, was not intended to improve adhesion between a rubber composition and a cord.

### DISCLOSURE OF INVENTION

An object of the present invention is to provide a rubber composition for a carcass ply and/or a belt, which has adhesion as compared favorably with a rubber composition mainly comprising raw materials derived from petroleum resources, and makes it possible to reduce an adverse effect on environment, and provide for the future decrease of petroleum supply, a carcass ply and/or a belt using the rubber composition, and a preparation process of the rubber composition.

The present invention relates to a rubber composition for a carcass ply and/or a belt, which comprises a rubber component comprising 30 to 90 % by weight of a natural rubber and 10 to 70 % by weight of an epoxidized natural rubber and a filler comprising not less than 80 % by weight of silica.

It is preferable that the rubber composition for a carcass ply and/or a belt further comprises 2 to 15 parts by weight of calcium stearate on the basis of 100 parts by weight of the epoxidized natural rubber.

It is preferable that the rubber composition for a carcass ply and/or a belt further comprises a silane coupling agent and polyethylene glycol and/or a silane compound.

It is preferable that the process for preparing the rubber composition for a carcass ply and/or a belt comprises (1) a step of kneading the natural rubber and silica, and (2) a step of kneading the kneaded product discharged in the step (1) and the epoxidized natural rubber.

Further, the present invention relates to a tire having a carcass ply and/or a belt, wherein the carcass cord and/or the belt cord using a cellulose fiber is coated with the aforementioned rubber composition for a carcass ply and/or a belt.

### BEST MODE FOR CARRYING OUT THE INVENTION

The rubber composition for a carcass ply and/or a belt of the present invention comprises a rubber component and a filler.

The rubber component comprises a natural rubber (NR).

NR is not particularly limited, and NR conventionally used in the tire industries such as TSR20 and RSS#3 can be used.

A content of NR in the rubber component is not less than 30 % by weight, preferably not less than 40 % by weight. When the content of NR is less than 30 % by weight, a rubber strength is lowered. The content of NR is not more than 90 % by weight, preferably not more than 85 % by weight. When the content of NR is more than 90 % by weight, sufficient adhesion cannot be obtained.

In the aforementioned rubber component, an epoxidized natural rubber (ENR) is used together with NR for the reason that ENR is a natural polymer having polarity effective in improvement of adhesion.

As for ENR, commercially available ENR may be used, or NR may be epoxidized to be used. A method of epoxidizing NR is not particularly limited, and epoxidization can be carried out by a chlorohydrin method, a direct oxidation method, a hydrogen peroxide method, an alkylhydroperoxide method, a peroxide method or the like. As the peroxide method, there is a method of reacting an organic peracid such as peracetic acid or performic acid with NR.

An epoxidization ratio of ENR is preferably not less than 4 % by mole, more preferably not less than 10 % by mole. When the epoxidization ratio of ENR is less than 4 % by mole, an effect of improving polarity is small, and there is a tendency that an effect of improving adhesion between the rubber and the cord is lost. The epoxidization ratio of ENR is preferably not more than 60 % by mole, more preferably not more than 50 % by mole. When the epoxidization ratio of ENR is more than 60 % by mole, frangibleness at low temperature is increased, and there is a tendency that vulcanization reversion of the rubber proceeds when vulcanizing at high temperature.

A content of ENR in the rubber component is not less than 10 % by weight, preferably not less than 15 % by weight. When the content of ENR is less than 10 % by weight, an effect of improving adhesion is small. The content of ENR is not more than 70 % by weight, preferably not more than 60 % by weight. When the content of ENR is more than 70 % by weight, vulcanization reversion proceeds when vulcanizing the rubber at high temperature, and adhesion between the rubber and the cord is lowered.

Examples of the aforementioned rubber component which can be contained in addition to NR and ENR are synthetic rubbers such as butadiene rubber (BR), styrene-butadiene rubber (SBR), isoprene rubber (IR), butyl rubber (IIR), halogenated butyl rubber (X-IIR), acrylonitrile-butadiene rubber (NBR), ethylene-propylene-diene rubber (EPDM), chloroprene rubber (CR), a halogenated product of a copolymer of isomonoolefin and paraalkylstyrene. However, it is preferable that synthetic rubbers are not contained for the reason of making it possible to reduce an adverse effect on environment and provide for the future depletion of petroleum oil.

Examples of the aforementioned fillers are, for instance, silica, carbon black, calcium carbonate, aluminum hydroxide, clay, and talc, and these fillers may be used alone or two or more kinds thereof may be used in combination. Among these, at least one filler selected from the group consisting of silica, calcium carbonate, aluminum hydroxide, clay and talc is preferable from the viewpoint that these fillers are raw materials derived from non-petroleum resources, thus making it possible to reduce an adverse effect on environment, and provide for the future depletion of petroleum oil, and silica is more preferable for the reason that a desirable rubber strength can be obtained.

Silica is not particularly limited, and silica prepared by a usual method can be used.

A BET specific surface area (BET) of silica is preferably not less than 90 m²/g, more preferably not less than 110 m²/g from the viewpoint that a sufficient rubber strength can be obtained. The BET of silica is preferably not more than 380 m²/g, more preferably not more than 250 m²/g from the viewpoint that a suitable hardness is maintained, and an interface between the rubber and the cord hardly breaks.

A content of silica in the filler is not less than 80 % by weight, preferably not less than 90 % by weight. When the content of silica is less than 80 % by weight, low heat-build up property is deteriorated. Particularly, the content of silica is most preferably 100 % by weight.

An amount of the filler is preferably not less than 30 parts by weight, more preferably not less than 40 parts by weight on the basis of 100 parts by weight of the rubber component, from the viewpoint that a sufficient rubber hardness is obtained, and the rubber and the cord are hardly peeled off. The amount of the filler is preferably not more than 60 parts by weight, more preferably not more than 55 parts by weight from the viewpoint that hardening of the rubber is inhibited and an interface between the rubber and the cord hardly breaks.

It is preferable to use a silane coupling agent together with the silica. The silane coupling agent is not particularly limited, and silane coupling agents conventionally used together with the silica in the tire industries can be used. Examples of such silane coupling agents are bis(3-triethoxysilylpropyl) polysulfide, bis(2-triethoxysilylethyl) polysulfide, bis(3-trimethoxysilylpropyl) polysulfide, bis(2-trimethoxysilylethyl) polysulfide, bis(4-triethoxysilylbutyl) polysulfide, and bis(4-trimethoxysilylbutyl) polysulfide, and these silane coupling agents may used alone or two or more kinds thereof may be used in combination.

An amount of the silane coupling agent is preferably not less than 6 parts by weight, more preferably not less than 8 parts by weight on the basis of 100 parts by weight of the silica, from the viewpoint that sufficient processability can be obtained. The amount of the silane coupling agent is preferably not more than 16 parts by weight, more preferably not more than 12 parts by weight from the viewpoint that a sufficient rubber strength can be obtained.

When the silane coupling agent is contained, it is preferable that polyethylene glycol (PEG) and/or a silane compound is further contained.

An amount of PEG is preferably not less than 2 parts by weight, more preferably not less than 3 parts by weight on the basis of 100 parts by weight of the silica, from the viewpoint that a sufficient effect of improving adhesion can be obtained. The amount of PEG is preferably not more than 50 parts by weight, more preferably not more than 40 parts by weight from the viewpoint that a sufficient rubber strength can be obtained.

Examples of the silane compound are, for instance, methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, hexyltrimethoxysilane, hexyltriethoxysilane, decyltrimethoxysilane, 3-glycidoxypropyltriethoxysilane, and 3-isocyanatepropyltriethoxysilane, and these silane compounds can be used alone or two or more kinds thereof can be used in combination. Among these, for the reason that adhesion between the rubber and the cord is improved, at least one silane compound selected from the group consisting of 3-glycidoxypropyltriethoxysilane, 3-isocyanatepropyltriethoxysilane and phenyltriethoxysilane is preferable, and phenyltriethoxysilane is more preferable.

An amount of the silane compound is not less than 2 parts by weight, more preferably not less than 3 parts by weight on the basis of 100 parts by weight of silica, from the viewpoint that an effect of improving adhesion between the rubber and the cord can be obtained. The amount of the silane compound is preferably not more than 20 parts by weight, more preferably not more than 15 parts by weight from the viewpoint that a sufficient rubber strength can be obtained.

It is preferable that the rubber composition for a carcass ply and/or a belt of the present invention further comprises calcium stearate.

An amount of calcium stearate is preferably not less than 2 parts by weight, more preferably not less than 3 parts by weight on the basis of 100 parts by weight of the epoxidized natural rubber, from the viewpoint that thermal aging of the epoxidized natural rubber can be improved. The amount of calcium stearate is preferably not more than 15 parts by weight, more preferably not more than 10 parts by weight from the viewpoint that a sufficient rubber strength can be obtained.

It is preferable that the rubber composition for a carcass ply and/or a belt of the present invention further comprises a vulcanization accelerator.

Various kinds of compounds are used as the vulcanization accelerator, and examples of such a vulcanization accelerator are sulfenamide compounds, guanidine compounds, thiazole compounds, aldehyde·ammonia compounds, aldehyde·amine compounds, thiourea compounds, thiuram compounds, dithiocarbamate compounds, and xanthogenate compounds, and these vulcanization accelerators may be used alone or two or more kinds thereof may be used in combination. Among these, sulfenamide compounds are preferable for the reason that a reaction in the vulcanization is initiated quickly.

Examples of sulfenamide vulcanization accelerators are N-tert-butyl-2-benzothiazolylsulfenamide (Nocceler NS available from Ouchi Shinko Chemical Industrial Co., Ltd.), N-cyclohexyl-2-benzothiazolylsulfenamide (Nocceler CZ available from Ouchi Shinko Chemical Industrial Co., Ltd.), and N,N'-dicyclohexyl-2-benzothiazolylsulfenamide (Nocceler DZ available from Ouchi Shinko Chemical Industrial Co., Ltd., or Sanceler DZ available from SANSHIN CHEMICAL INDUSTRY CO., LTD.), and N,N'-dicyclohexyl-2-benzothiazolylsulfenamide is preferable for the reason that a reaction speed in the vulcanization is relatively moderate, and an adhesion strength is improved.

An amount of the vulcanization accelerator is not less than 0.5 part by weight, more preferably not less than 1 part by weight on the basis of 100 parts by weight of the rubber component, from the viewpoint that a suitable vulcanization speed is maintained in the vulcanization, and a sufficient rubber strength can be obtained. The amount of the vulcanization accelerator is preferably not more than 3 parts by weight, more preferably not more than 2 parts by weight.

The rubber composition for a carcass ply and/or a belt of the present invention can further comprise a softening agent.

Examples of the softening agent are, for instance, vegetable oils and fats such as linseed oil, soybean oil, castor oil, cotton seed oil, rapeseed oil, palm oil, coconut oil, peanut oil, rosin, pine oil, pine tar, tall oil, corn oil, rice oil, safflower oil, sesame oil, olive oil, sunflower oil, palm kernel oil, tsubaki oil, jojoba oil, macadamia nut oil, safflower oil, and tung oil, oleyl alcohol, animal oils and fats such as fish oil, plasticizers derived from non-petroleum resources except vegetable and animal oils and fats such as terpene resin, aromatic process oils such as aromatic oil, petroleum oils such as paraffin process oil and naphthene process oil, and petroleum resin.

An amount of the softening agent is preferably not more than 15 parts by weight, more preferably not more than 12 parts by weight from the viewpoint that a sufficient rubber strength can be obtained.

The rubber composition for a carcass ply and/or a belt of the present invention can also comprise additives conventionally used in the tire industries such as various antioxidants, stearic acid, zinc oxide and a vulcanizing agent such as sulfur, in addition to the aforementioned rubber component, filler, silane coupling agent, PEG, silane compound, calcium stearate, vulcanization accelerator, and softening agent.

The rubber composition for a carcass ply and/or a belt of the present invention is used for a carcass ply and/or a belt since a ratio of non-petroleum resources can be made large by using NR, ENR and silica, and adhesion can be improved by using particularly ENR.

A process for preparing the rubber composition for a carcass ply and/or a belt of the present invention preferably comprises steps 1 and 2 described below.

In the step 1, NR and silica are kneaded.

In the step 2, the kneaded product discharged in the step 1 and ENR are kneaded.

In the step 1, additives such as a filler other than silica, a silane coupling agent, PEG, a silane compound, calcium stearate, a softening agent, various antioxidants, stearic acid, and zinc oxide can be compounded.

ENR is kneaded in the step 2, not in the step 1, thereby, an effect of improving dispersibility of silica in the rubber can be obtained.

A carcass cord and/or a belt cord is coated with the rubber composition for a carcass ply and/or a cord of the present invention, or the rubber composition for a carcass ply and/or a cord of the present invention in which the above additives are compounded by the aforementioned preparation process or by a general process, and then extrusion-processed while being adjusted to the shape of a carcass ply and/or a belt of a tire in an unvulcanized stage, and molded on a tire molding machine by a general process. Thus an unvulcanized tire is formed. A tire of the present invention is obtained by heating and pressuring this unvulcanized tire in a vulcanizer.

The carcass cord and/or belt cord coated with the rubber composition for a carcass ply and/or a belt of the present invention is a steel cord or a fiber cord. Herein, the fiber cord is a cord obtained from materials such as cellulose, for example, rayon, polyester, nylon, polyethylene terephthalate, and aramid. Among these, a fiber cord is preferable, and a fiber cord using rayon is more preferable for the reason that such a fiber cord is a material derived from non-petroleum resources, thus making it possible to reduce an adverse effect on environment, and provide for the future depletion of petroleum.

By using the rubber composition for a carcass ply and/or a belt of the present invention, the tire of the present invention can be an ecological tire, which makes it possible to reduce an adverse effect on environment, and provide for the future decrease of petroleum supply.

### EXAMPLES

The present invention is specifically explained based on Examples, but the present invention is not limited only thereto.

Various chemicals used in Examples and Comparative Examples are collectively shown in the following.
Natural rubber (NR): TSR20
Epoxidized natural rubber (ENR): ENR25 (epoxidization ratio: 25 % by mole) available from Kumpulan Guthrie Berhad Co.
Styrene-butadiene rubber (SBR): SBR1502 available from JSR Corporation
Carbon black: SHOWBLACK N330 (N₂SA: 79 m²/g) available from SHOWA CABOT K.K.
Silica: Ultrasil VN3 (BET: 175 m²/g) available from Deggussa Co.
Silane coupling agent: Si75 (bis(triethoxysilylpropyl)disulfide) available from Deggussa Co.
Polyethylene glycol (PEG): PEG4000 (average molecular weight: 4,000) available from NOF Corporation
Silane compound 1: KBE403 (3-glycidoxypropyltriethoxysilane) available from Shin-Etsu Chemical Co., Ltd.
Silane compound 2: KBE9007 (3-isocyanate propyltriethoxysilane) available from Shin-Etsu Chemical Co., Ltd.
Silane compound 3: KBE103 (phenyltriethoxysilane) available from Shin-Etsu Chemical Co., Ltd.
Aromatic oil: JOMO Process X140 available from Japan Energy Corporation
Soybean oil: Soybean oil available from Nisshin Oillio Group, Ltd.
Calcium stearate: Calcium stearate GF-200 available from NOF Corporation
Antioxidant 1: NOCRAC 224 (2,2,4-trimethyl-1,2-dihydroquinoline polymer) available from Ouchi Shinko Chemical Industrial Co., Ltd.
Antioxidant 2: Antigen 6C (N-(1,3-dimethylbutyl)-N'-phenyl-p-phenylenediamine) available from Sumitomo Chemical Co., Ltd.
Stearic acid: Stearic acid "Tsubaki" available from NOF Corporation
Zinc oxide: available from Mitsui Mining & Smelting Co., Ltd.
Sulfur: Crystex HSOT20 available from Flexsys K. K.
Vulcanization accelerator 1: Nocceler DZ (N,N'-dicyclohexyl-2-benzothiazolylsulfenamide) available from Ouchi Shinko Chemical Industrial Co., Ltd.
Vulcanization accelerator 2: Nocceler CZ (N-cyclohexyl-2-benzothiazolylsulfenamide) available from Ouchi Shinko Chemical Industrial Co., Ltd.

### EXAMPLES 1 to 9 and COMPARATIVE EXAMPLES 1 to 6

According to the compounding formulation in Table 1, chemicals shown in the step 1 in Table 1 were kneaded for 4 minutes under 140°C by using a Bumbury's mixer to obtain a kneaded product 1 (step 1). After discharging once, to the obtained kneaded product 1, chemicals shown in the step 2 of Table 1 were added, and the mixture was kneaded for 4 minutes under 130°C to obtain a kneaded product 2 (step 2). Then, using an open roll, to the obtained kneaded product 2, chemicals shown in the step 3 of Table 1 were added, and the mixture was kneaded for 5 minutes under 60°C and formed into a sheet to prepare an unvulcanized rubber sheet having a thickness of 0.7 mm (step 3). In Examples 1 to 5 and Comparative Examples 1 to 6, the step 2 was not carried out.

### (Peeling test)

A rayon cord or a nylon cord aligned with equivalent intervals were coated with the aforementioned unvulcanized rubber sheet, vulcanized under 150°C for 30 minutes, and cut into 25 mm-width to prepare a test piece for the peeling test. This test piece was peeled off at a pulling speed of 50 mm/min, and peeling strength (kgf/25 mm) was measured. A ratio of a portion of the rayon cord or nylon cord coated with a rubber composition (peeling score) was evaluated on the basis of 5 points at maximum. The larger the peeling strength is and the larger the peeling score is, the more excellent adhesion is.

Results of the aforementioned test are shown in Table 1.

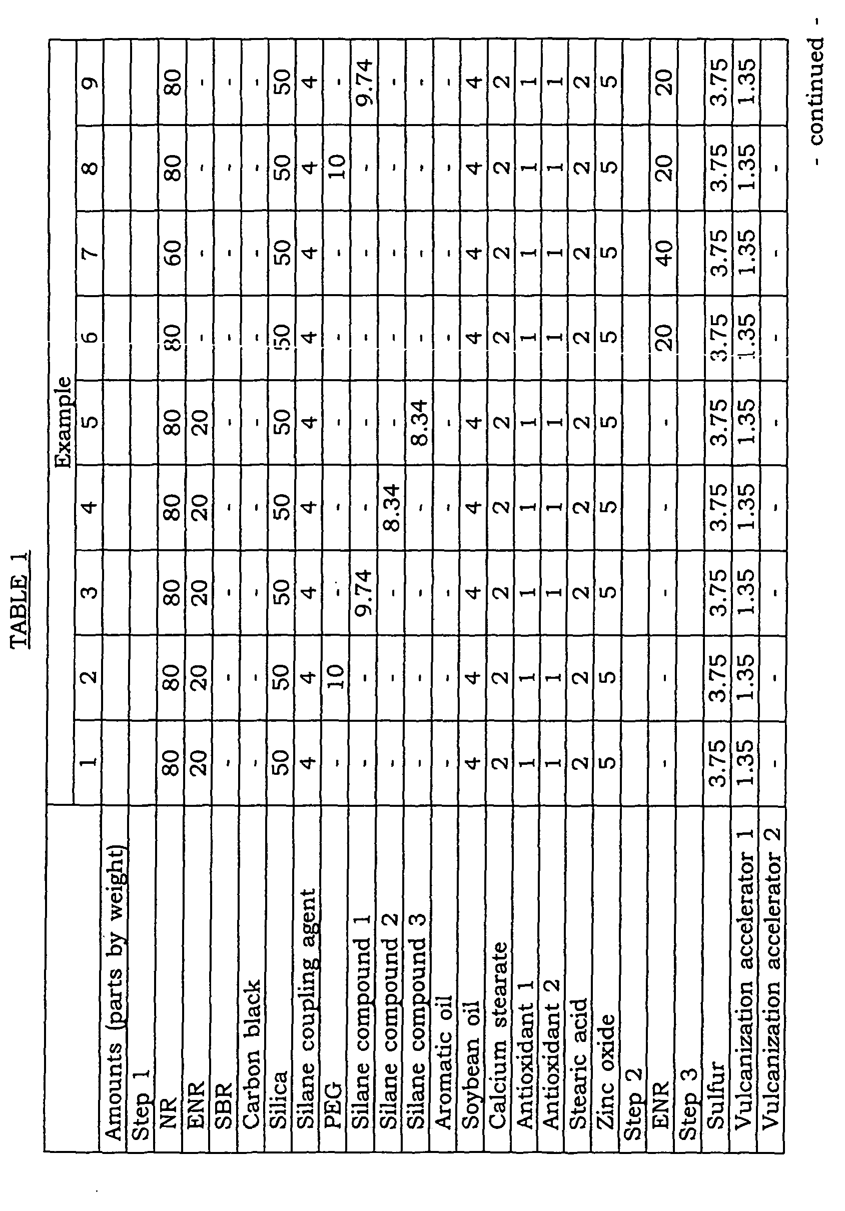

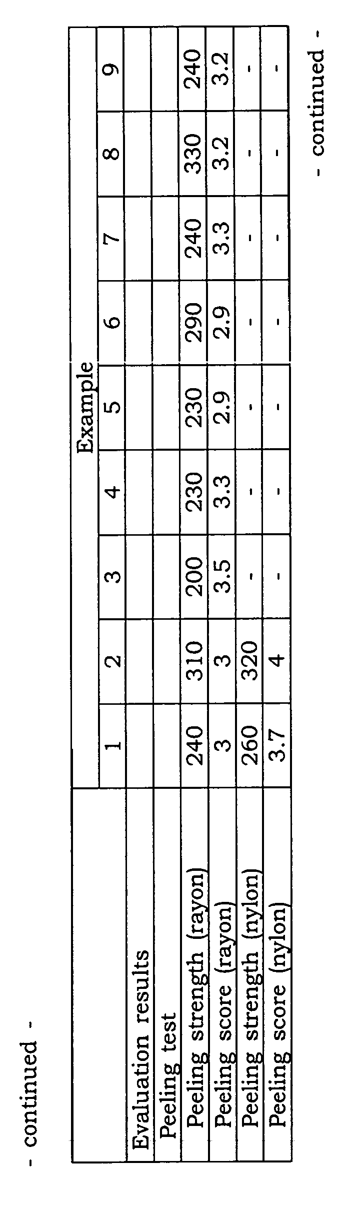

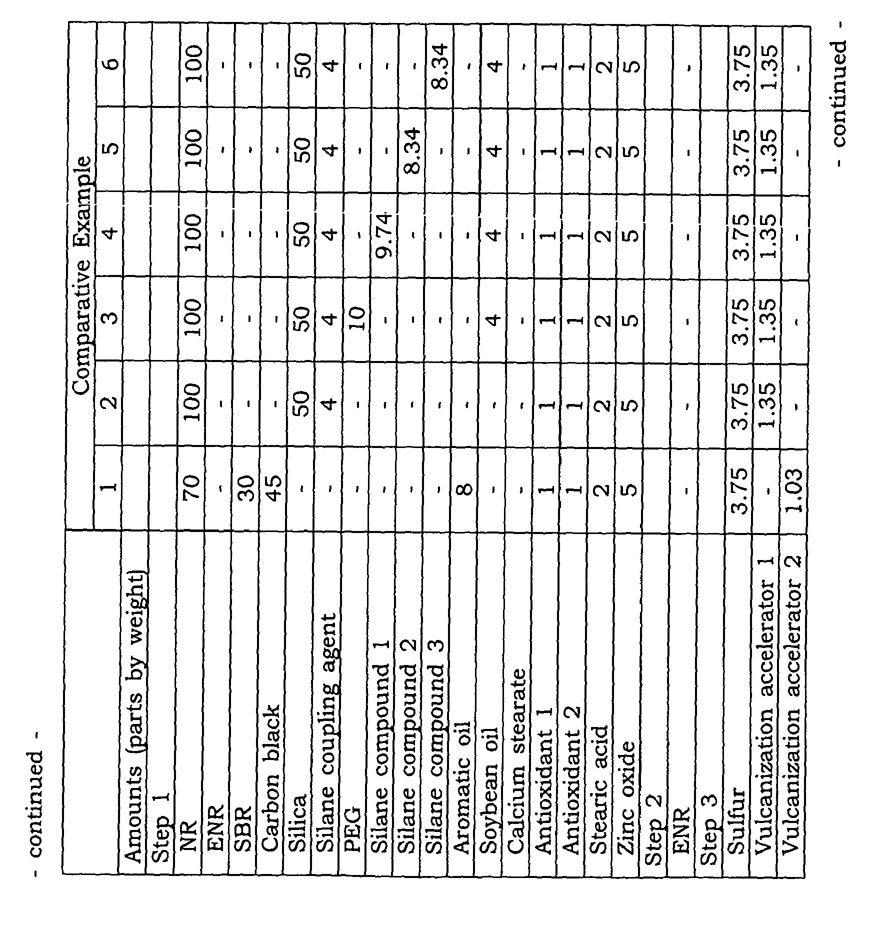

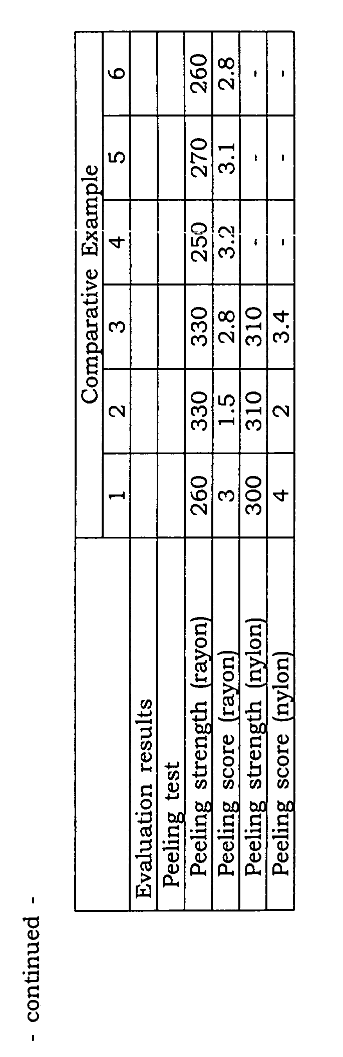

### INDUSTRIAL APPLICABILITY

According to the present invention, there can be provided a rubber composition for a carcass ply and a belt, which has adhesion as compared favorably with a rubber composition mainly comprising raw materials derived from petroleum resources, and makes it possible to reduce an adverse effect on environment and provide for the future decrease of petroleum supply since the rubber composition comprises a natural rubber and a specific filler, a carcass ply and/or a belt using the rubber composition, and a preparation process of the rubber composition.

## Claims

1. A rubber composition for a carcass ply and/or a belt, which comprises a rubber component comprising 30 to 90 % by weight of a natural rubber and 10 to 70 % by weight of an epoxidized natural rubber and a filler comprising not less than 80 % by weight of silica.

2. The rubber composition for a carcass ply and/or a belt of Claim 1, comprising a silane coupling agent and polyethylene glycol and/or a silane compound.

3. The rubber composition for a carcass ply and/or a belt of Claim 1 or 2, comprising 2 to 15 parts by weight of calcium stearate on the basis of 100 parts by weight of the epoxidized natural rubber.

4. A process for preparing the rubber composition for a carcass ply and/or a belt of any of Claims 1 to 3, comprising:
(1) a step of kneading the natural rubber and silica, and
(2) a step of kneading the kneaded product discharged in the step (1) and the epoxidized natural rubber.

5. A tire having a carcass ply and/or a belt, wherein a carcass cord and/or a belt cord using a cellulose fiber is coated with the rubber composition for a carcass ply and/or a belt of any of Claims 1 to 3.
